# EUROPÄISCHE PATENTANMELDUNG

(11) **EP 0 615 039 A1**
(43) Veröffentlichungstag der Anmeldung: **14.09.1994**
(21) Anmeldenummer: 94102784.9
(22) Anmeldetag: 24.02.1994
(51) Int. Cl.: E04F 17/02, F23J 13/02

(54) **Luft-Abgas-Schornstein**

(30) Priorität: 10.03.1993 DE 9303502 U
(71) Anmelder: Schneider, Günther Dipl.-Ing., D-95326 Kulmbach (DE)
(72) Erfinder: Schneider, Günther Dipl.-Ing., D-95326 Kulmbach (DE)
(74) Vertreter: Metzler, Jürgen, Dipl.-Ing.

(57) **Zusammenfassung**

Es handelt sich um einen Luft-Abgas-Schornstein für mehrere Brennwertgeräte, insbesondere Gas-Brennwert-Thermen. Der Schornstein (1) weist eine Abgasleitung (4) auf, die aus mehreren zusammengesteckten Teilen (7, 8, 11) aus korrosionsbeständigem Edelstahl besteht. Die Abgasleitung (4) ist etwa konzentrisch bzw. koaxial innerhalb des Schornsteins (1) mit Abstand zu dessen Innenflächen angeordnet, so daß eine Frischluftzuführung (5) gebildet wird. Zweckmäßigerweise sind über die Länge der Abgasleitung (4) verteilt mehrere Abstandshalter (6) angeordnet. Der Luft-Abgas-Schornstein ist wegen des Stecksystems einfach im Aufbau und in der Montage und kann insbesondere mit Erfolg bei der Altbausanierung eingesetzt werden.

## Beschreibung

Die Erfindung bezieht sich auf einen Luft-Abgas-Schornstein für mehrere Brennwertgeräte, insbesondere Gas-Brennwert-Thermen.

Der Schornstein eines Gebäudes bildet einen über das Dach hochgeführten Abzugskanal für die Rauchgase der Feuerstätten.

Er ist entweder gemauert oder besteht aus einzelnen zusammengesetzten Formstücken. Dabei müssen bestimmte Kriterien erfüllt sein, damit die Heizungsanlagen ordnungsgemäß betrieben werden können. Die Abgase müssen beispielsweise so ins Freie gefördert werden, daß ein Niederschlag von dampfförmigen Abgasbestandteilen in den Schornstein, d.h. ein Kondensieren, möglichst vermieden wird. Auch darf die Verbrennungsluftführung und Abgasförderung nicht durch Luftströmungen gestört sein. Der statische Druck des Abgases im Schornstein muß geringer sein als der statische Druck der Luft in den umgebenden Räumen, so daß ein Austreten der Abgase aus dem Schornstein auch bei evtl. Undichtigkeiten vermieden wird. Bei entsprechender konstruktiver Gestaltung des Schornsteins bewirkt dieser zugleich die Frischluftzufuhr, so daß die Feuerstätten raumluftunabhängig betrieben werden können. Bekannte Schornsteine sind ortsgebunden nur unter entsprechend großem Aufwand herstellbar und benötigen einen großen Montageaufwand. Auch gestaltet sich die Altbausanierung im Hinblick auf die dort vorhandenen, für moderne Brennwert-Geräte nicht geeigneten Schornsteine sehr schwierig und kostenaufwendig. Diese modernen Thermen benötigen nämlich einen Schornstein, der auf sie abgestimmt ist, so daß sie optimal betrieben werden können.

Die Aufgabe der Erfindung besteht darin, einen Luft-AbgasSchornstein bzw. -Anlage zu schaffen, der einfach im Aufbau und in der Montage ist, ohne Schwierigkeiten bei der Altbausanierung eingesetzt werden kann und der die an ihn gestellten Forderungen optimal erfüllt, d.h. für einen wirksamen Abzug der Abgase und eine optimale Frischluftzuführung sorgt, so daß auch mehrere angeschlossene Brennwert-Geräte mit hohem Wirkungsgrad betrieben werden können.

Zur Lösung dieser Aufgabe sind bei der Erfindung die im kennzeichnenden Teil des Anspruches 1 angegebenen Gestaltungsmerkmale vorgesehen. In den dem Anspruch 1 folgenden Ansprüchen sind für die Aufgabenlösung vorteilhafte und förderliche Weiterbildungen beansprucht.

Der zum Anschluß mehrerer Brennwert-Geräte geeignete Luft-Abgas- Schornstein weist also eine innerhalb des Schornsteins etwa konzentrisch bzw. koaxial zu diesem angeordnete Abgasleitung auf, die allseitig mit Abstand zu den Innenwänden des Schornsteins verlauft, wobei eine etwa konzentrisch bzw. koaxial liegende Frischluftzuführung innerhalb des Schornsteins gebildet wird. Die Abgasleitung besteht aus mehreren zusammengesteckten Teilen, nämlich Rohr- oder Formstücken, an deren einem Ende eine Muffe angeformt ist, die das jeweils andere Ende des benachbarten Rohr- bzw. Formstückes aufnimmt. Die Einzelteile der Abgasleitung bestehen aus korrosionsbeständigem Edelstahl, so daß zeitweise sich bildende saure Kondensate, insbesondere in der Einschaltphase der Brennwert-Thermen, die Abgasleitung nicht zerstören können. Es handelt sich also bei der Erfindung um ein kombiniertes System für dezentrale Brennwert-Geräte, insbesondere Brennwert-Gas-Feuerstätten, die raumluftunabhängig betrieben werden können. Aufgrund des Stecksystems läßt sich die Abgasleitung vor Ort leicht und schnell montieren, so daß eine kostensparende Herstellung, insbesondere auch bei der Altbausanierung, möglich ist. Um die koaxiale Führung und Halterung der Abgasleitung sicherzustellen, sind über deren Länge verteilt mehrere Abstandshalter vorgesehen, die die Leitung seitlich an den Innenwänden des Schornsteins abstutzen. Zum Anschluß der einzelnen Feuerstätten weist die Abgasleitung mehrere Formstücke mit einem seitlichen Rohrstutzen und gleichzeitiger Frischluftzuführung auf. Zweckmäßigerweise ist am unteren Ende der Abgasleitung ein als Kondensatsammler ausgebildeter Abschluß angeordnet, der mit einer Ablaufleitung für das Kondensat ausgerüstet ist. Auf diese Weise wird evtl. entstehendes und nach unten abfließendes Kondensat aufgefangen und abgeleitet.

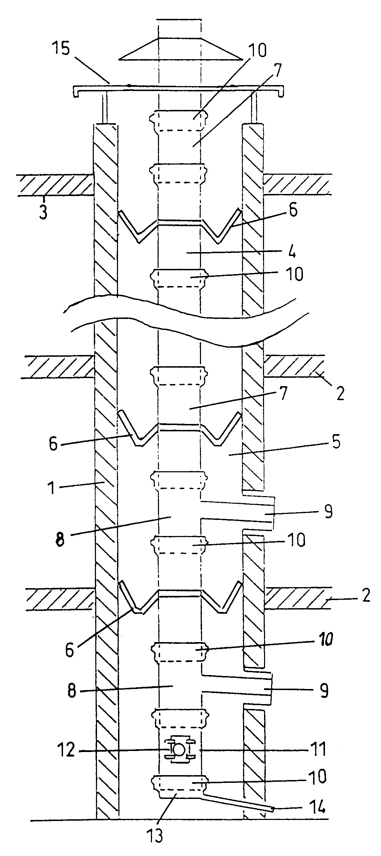

Die Erfindung wird nun anhand eines Ausführungsbeispiels im Zusammenhang mit der einzigen Figur der Zeichnung näher erläutert, in der ein innerhalb eines Gebäudes angeordneter Schornstein mit innenliegender Abgasleitung, z.T. abgebrochen, gezeigt ist.

Wie aus der Zeichnung zu erkennen ist, erstreckt sich der gemauerte Schornstein 1 über mehrere Geschosse, die schematisch durch die waagerecht verlaufenden Geschoßdecken 2 angedeutet sind, und ragt schließlich über den Dachfirst bzw. das Dach 3 nach außen. Innerhalb des Kamins bzw. Schornsteins 1 ist eine Abgasleitung 4 zum Anschluß mehrerer dezentral liegender Brennwert-Feuerstätten angeordnet. Diese Abgasleitung 4 verläuft etwa konzentrisch bzw. koaxial innerhalb des Schornsteins 1 und hält allseitig einen Abstand zu den Innenwänden des Schornsteins 1 ein, so daß ein etwa konzentrisch liegender Hinterlüftungsspalt 5 für die Frischluftzufuhr gebildet wird. Zur Lagesicherung der Abgasleitung 4 sind über dessen Länge verteilt mehrere Abstandshalter 6 angeordnet, die sich an den Innenwänden des Schornsteins 1 abstützen.

Die Abgasleitung 1 selbst besteht aus mehreren Einzelteilen, nämlich Rohr- oder Formstücken 7 und 8, wobei die Formstücke 8 einen seitlich abstehenden, den Schornstein 1 durchdringenden und in das jeweilige Geschoß hineinragenden Rohrstutzen 9 aufweisen, an den das jeweilige Brennwertgerät anschließbar ist. Der Rohrstutzen 9 ist in seinem Endbereich doppelwandig gestaltet, so daß er nicht nur der Abgasführung, sondern auch der Frischluftführung aus dem Hinterlüftungsspalt 5 dient. Wie weiterhin deutlich zu erkennen ist, weist jedes der Einzelteile 7, 8 am einen (oberen) Ende eine Muffe 10 auf, in die das jeweilige freie (untere) Ende des benachbarten Einzelteils eingesteckt ist, was sich leicht vor Ort vornehmen läßt, so daß die Montage leicht durchführbar ist. Das unterste Formstück 11 ist mit einer Prüf- bzw. Entnahmeöffnung ausgestattet, die mittels einer Tür bzw. Klappe 12 verschließbar ist. Dieses Formstück 11, das weiterhin mit einer Öffnung versehen ist, die den Druckausgleich zwischen Frischluft- und Abgasführung gewährleistet, greift mit seinem unteren Ende in die Muffe 10 eines als Kondensatsammler ausgebildeten Gefäßformstücks 13 ein, an dem eine Kondensatableitung 14 angeordnet ist, die beispielsweise zu einem nicht weiter gezeigten Sammelbehälter od. dgl. führt. Das obere Ende des Schornsteins 1 ist mit einer luftdurchlässigen Abdeckung 15 versehen, durch die die Abgasleitung 4 hindurchgeführt ist. Sämtliche Einzelteile der Abgasleitung 4 bestehen aus einem korrosionsbeständigen Edelstahl mit einer Wandstärke von etwa 1,0 mm. Mit der beschriebenen Abgasanlage können also raumluftunabhängige Feuerstätten, insbesondere Brennwertgeräte bzw. -Gas-Thermen betrieben werden, wobei ein späterer Umbau, insbesondere im Zusammenhang mit der Altbausanierung, leicht und kostengünstig durchführbar ist.

## Patentansprüche

1. Luft-Abgas-Schornstein für mehrere Brennwertgeräte, insbesondere Gas-Brennwert-Thermen, gekennzeichnet durch eine aus mehreren zusammengesteckten Teilen (7, 8, 11) bestehende Abgasleitung (4), die etwa konzentrisch bzw. koaxial innerhalb des Schornsteins (1) mit Abstand zu dessen Innenflächen unter Bildung einer etwa konzentrisch bzw. koaxial liegenden Frischluftzuführung (5) angeordnet ist.

2. Schornstein nach Anspruch 1, dadurch gekennzeichnet, daß die Einzelteile (7, 8, 11) der Abgasleitung (4) aus korrosionsbeständigem Edelstahl bestehen.

3. Schornstein nach Anspruch 1 oder 2, dadurch gekennzeichnet, daß die Abgasleitung (4) aus Rohr- bzw. Formstücken (7, 8, 11) gebildet ist, an deren einem Ende jeweils eine Muffe (10) angeformt ist, in die jeweils das andere Ende des benachbarten Rohr- bzw. Formstücks eingesteckt ist.

4. Schornstein nach einem der Ansprüche 1 bis 3, dadurch gekennzeichnet, daß über die Länge der Abgasleitung (4) verteilt mehrere Abstandshalter (6) angeordnet sind.

5. Schornstein nach einem der Ansprüche 1 bis 4, gekennzeichnet durch eine Abgasleitung (4), die mehrere Formstücke (8) mit einem als Feuerungsanschluß ausgebildeten seitlichen Rohrstutzen (9) mit Frischluftzuführung aufweist.

6. Schornstein nach einem der Ansprüche 1 bis 5, dadurch gekennzeichnet, daß am unteren Ende der Abgasleitung (4) ein Kondensatsammler (13) mit Ablaufleitung (14) angeordnet ist.
